# FASCICULE DE BREVET EUROPEEN

(11) **EP 1 575 403 B1**
(45) Date de publication et mention de la délivrance du brevet: **05.04.2006**
(21) Numéro de dépôt: 03815423.3
(22) Date de dépôt: 17.12.2003
(51) Int. Cl.: A47J 36/02

(54) **SURFACE DE CUISSON FACILE A NETTOYER**
LEICHT ZU REINIGENDE KOCHFLÄCHE
EASY-TO-CLEAN COOKING SURFACE

(30) Priorité: 20.12.2002 FR 0216231
(43) Date de publication de la demande: 21.09.2005
(73) Titulaire: SEB S.A., 69130 Ecully (FR)
(72) Inventeur: COUDURIER, Alain, F-73410 Albens (FR)
(74) Mandataire: Kiehl, Hubert
(86) Numéro de dépôt international: PCT/FR2003/003774
(87) Numéro de publication internationale: WO 2004/064586

(56) Documents cités:
- EP-A- 0 966 910
- FR-A- 2 760 621
- US-A- 3 173 202
- PATENT ABSTRACTS OF JAPAN vol. 014, no. 020 (C-676), 17 janvier 1990 (1990-01-17) & JP 01 262811 A (SACHIYUKI KATO;OTHERS: 02), 19 octobre 1989 (1989-10-19)
- PATENT ABSTRACTS OF JAPAN vol. 018, no. 131 (C-1175), 3 mars 1994 (1994-03-03) & JP 05 317179 A (NARUMI CHINA CORP), 3 décembre 1993 (1993-12-03)

## Description

La présente invention concerne le domaine des articles destinés à la préparation et à la cuisson des aliments et plus particulièrement la surface de cuisson de ces articles en contact avec les aliments à traiter.

Depuis de nombreuses années, des efforts importants ont été développés afin de faciliter la préparation quotidienne des repas. Parmi les progrès notables, les revêtements à base de polymères fluorocarbonés en tant que revêtement antiadhésif dans les ustensiles de cuisine se sont rapidement développés depuis la fin des années 1950. De tels revêtements sont mondialement connus depuis que le procédé présenté dans le brevet FR 1120749 a permis une fixation sûre de tels revêtements sur des métaux divers, tel l'aluminium.

Toutefois, de tels revêtements restent fragiles. Ainsi, des astuces ont été développées afin de renforcer mécaniquement la couche sur son support. De nombreux brevets de perfectionnement décrivent des méthodes et moyens permettant d'accroître la résistance aux rayures de tels revêtements, en agissant sur le revêtement et/ou sur le substrat. Malgré tout, de tels revêtements restent sensibles à l'usage répété de matériaux métalliques aiguisés ou pointus, tels des couteaux ou fourchettes.

Parallèlement, des développements ont été menés sur des surfaces résistantes mécaniquement dont on a essayé d'améliorer la facilité de nettoyage. Des dépôts métalliques, tels le chromage sur inox, les quasi-cristaux, ou non métalliques (silicates,...) sont ainsi apparus.

Les quasi-cristaux sont une phase ou composé métallique présentant, au niveau cristallographique, des symétries de rotation d'axe d'ordre 5, 8, 10 ou 12, comme les phases isocaédriques et décagonales. De tels revêtements sont notamment décrits dans le brevet EP 0 356 287 et présentent des qualités de résistance à la rayure, voire d'anti-adhérence dans certains cas.

Le document EP-A-966 910 décrit une surface de cuisson formée d'une couche superficielle en nitrure de zirconium.

La présente invention vise à remédier aux inconvénients précités de l'art antérieur, en proposant une surface de cuisson aux caractéristiques améliorées de facilité de nettoyage, de résistance à la corrosion, tout en présentant une bonne tenue mécanique.

La présente invention est atteinte par une surface de cuisson d'aliment pour ustensile de cuisine ou appareil de cuisson, caractérisée en ce que cette surface de cuisson est un alliage métallique de zirconium et d'au moins un autre métal, et dont la teneur en zirconium est d'au moins 75 %.

Les alliages métalliques à base de zirconium, tel les zircaloys, sont généralement connus pour leur résistance exceptionnelle à la corrosion, et leur bonne résistance mécanique à l'exposition neutronique en continu, tout en restant transparent aux neutrons thermiques. Ils sont essentiellement utilisés dans l'industrie nucléaire en tant qu'enveloppe des barres de combustibles d'oxydes d'uranium. De tels alliages comprennent essentiellement du zirconium avec quelques éléments d'alliage tel l'étain, le fer, le chrome et le nickel.

D'une manière surprenante, il a été constaté, au cours d'essais, que des alliages d'une pluralité de métaux et contenant une majorité de zirconium, présentaient également des propriétés de facilité de nettoyage lorsque de telles surfaces étaient utilisées en tant que surface de cuisson et que des denrées alimentaires restaient accrochées à la surface, par exemple après une calcination des produits mis à cuire. Cette facilité de nettoyage peut être exprimée par la possibilité d'enlever facilement des éléments carbonisés sur la surface de cuisson.

Avantageusement, l'alliage contient moins de 10 % d'éléments d'addition au zirconium.

De tels matériaux, dont les alliages appelés zircaloys en font partie, sont d'obtention plus facile car les conditions de cristallisation sont moins perturbées par les éléments d'alliage en faible teneur.

Selon un premier mode de mise en oeuvre de l'invention, la surface de cuisson d'aliment pour ustensile de cuisine ou appareil de cuisson est obtenue par le dépôt d'une épaisseur appropriée du matériau métallique sur un substrat. Ce dépôt peut être réalisé par l'un ou l'autre des procédés suivants : projection thermique d'une poudre d'une granulométrie adéquate, dépôt par électrophorèse d'une poudre micro ou sub-micronique, pulvérisation cathodique d'une cible massive. Dans ce dernier cas la cible peut être obtenue par assemblage sur un substrat de cuivre d'une ou plusieurs tôles ou plaques de matériau ayant la composition recherchée, lesdites tôles ou plaques étant obtenues soit par frittage de poudre ou projection thermique de poudre, soit issues de coulée. D'une manière générale, toutes les techniques de dépôt physique en phase vapeur peuvent être utilisées. D'autres techniques, telles le compactage à chaud ou le dépôt par électrolyse peuvent également être utilisées.

Cette mise en oeuvre présente l'avantage d'utiliser peu de matière et de pouvoir ajuster une faible épaisseur de matériau sur le substrat en vue de réaliser la surface de cuisson.

Toutes ces techniques permettent, par ailleurs, d'obtenir des dépôts en forte cohésion avec le substrat sur lequel ils sont déposés. Les risques de décollement du dépôt au cours de l'utilisation sont ainsi minimisés.

Selon un second mode de mise en oeuvre de l'invention, la surface de cuisson d'aliment pour ustensile de cuisine ou appareil de cuisson est obtenue par assemblage d'une tôle métallique cristalline ayant la composition recherchée sur un substrat. Cette mise en oeuvre présente l'avantage de se rapprocher des mises en oeuvre connues d'assemblage des métaux, ce qui permet de pouvoir adapter des techniques connues sans développement spécifique important.

Les tôles d'alliage de zirconium peuvent être obtenues par les techniques connues de la métallurgie, telle un laminage d'un lingot issu d'une fusion d'un mélange de métaux.

L'assemblage de la tôle sur le substrat peut être réalisé par l'une des techniques suivantes : colaminage, brasage, frappe à chaud, d'une manière connue en soi. Le placage par explosion peut également être envisagé.

Avantageusement, la tôle et le substrat subissent, après assemblage, une étape de mise en forme par emboutissage. Le substrat peut être composé d'une ou plusieurs tôle(s) métallique(s) des matériaux suivants : aluminium, inox, fonte, acier, cuivre.

D'autres avantages issus des essais apparaîtront à la lecture de la description qui va suivre, en relation avec un exemple d'illustration de la présente invention donné à titre d'exemple non limitatif.

L'exemple de réalisation de l'invention concerne un dépôt par PVD, d'un alliage dénommé zircaloy 2 (1,5 % d'étain, 0,14 % de fer, 0,10 % de chrome et 0,05 % de nickel) sur inox. Une face de ce dépôt a subi un polissage poussé, proche du poli optique, avant la réalisation d'essais, afin de la rendre comparable à d'autres surfaces de cuisson pour que les essais d'évaluation de la facilité à nettoyer une telle surface, dans une utilisation de cuisson domestique, puissent être comparés.

Le système d'évaluation de la facilité de nettoyage permet de quantifier les capacités d'une surface de cuisson à retrouver son aspect d'origine après usage. Ce système d'évaluation comprend les étapes suivantes :
- la surface est localement recouverte d'un mélange alimentaire de composition connue,
- ce mélange est carbonisé dans un four dans des conditions définies, par exemple 210 °C pendant 20 minutes,
- après refroidissement, la surface est mise à tremper pendant un temps contrôlé dans un mélange d'eau et de détergent,
- un tampon abrasif est ensuite appliqué sous une contrainte définie à l'aide d'un appareil à abraser (plynomètre) sur la surface souillée dans un mouvement de va-et-vient pendant un nombre donné de cycles,
- le pourcentage de la surface correctement nettoyée est noté et caractérise la facilité de nettoyage de la surface de cuisson.

Les essais menés sur différents types de surface permettent ainsi d'évaluer comparativement la qualité des surfaces quant à leur facilité de nettoyage.

Bien entendu, les essais sont réalisés en respectant les mêmes paramètres pour chaque étape du système d'évaluation : même mélange alimentaire, même surface d'application du mélange alimentaire, même température de carbonisation,...

Le tableau comparatif suivant montre les résultats obtenus sur trois surfaces de cuisson différentes, à savoir un inox poli, un quasi-cristaux, et l'alliage zircaloy 2 déposé sur inox tel que précédemment décrit, après polissage, dans un test sévère avec une composition alimentaire à base de lait et de riz réputée comme difficile à nettoyer une fois carbonisée. Un tel test permet ainsi de bien mettre en évidence les différences entre la qualité de nettoyage des surfaces.

| | Inox poli | Quasi-cristaux | Zircaloy 2 poli sur inox |
|---|---|---|---|
| Quantité de résidu carbonisé enlevée | 30 % | 40 % | 80 % |

Le tableau montre sans ambiguïté les résultats très intéressants obtenus avec l'alliage zircaloy 2 déposé sur inox. D'autres tests conduits sur une base aluminium montrent des résultats analogues.

Il est à noter que le nombre de cycles d'abrasion sur le plynomètre a été fixé à 15. Ce faible nombre de cycles met bien en évidence la qualité de facilité de nettoyage de la surface selon l'invention puisqu'il ne reste plus que 20 % de la surface souillée après 15 mouvements de va-et-vient du tampon abrasif.

Des essais répétitifs après nettoyage complet de la surface montrent que la facilité de nettoyage de l'alliage présenté n'est pas altérée.
Avantageusement,-lors du procédé de dépôt, une nitruration de la couche est réalisée par adjonction d'azote. Une telle nitruration peut également être envisagée lors d'une élaboration de la couche différente, par un traitement thermique approprié suite à l'élaboration de ladite couche. Une telle nitruration permet d'augmenter la dureté de la couche, ce qui confère à la surface de cuisson une meilleure résistance à l'abrasion.

D'autres techniques de traitement thermique peuvent être employées pour augmenter la dureté de l'alliage. Pour les alliages zircaloys, on peut utiliser la trempe à l'eau depuis le domaine b. On peut également utiliser des trempes en phase solide par laser ou équivalent.

Lorsque la mise en oeuvre de l'invention implique l'utilisation d'un substrat, celui-ci est alors composé d'une ou plusieurs tôle(s) métallique(s) des matériaux suivants : aluminium, inox, fonte, acier, cuivre. Cependant, la présente invention n'est pas limitée à la réalisation d'une couche de faible épaisseur d'un composé métallique cristallin tel que précédemment décrit, déposé ou assemblé sur un substrat épais, mais vise également à la réalisation de matériau massif, avec ou sans substrat, ce dernier, lorsqu'il est présent, n'ayant pas un rôle de support mécanique de la couche, mais assurant une autre fonction, telle que la répartition thermique de la chaleur pour un ustensile posé sur une source de chaleur (poêle, casseroles,...).

## Revendications

1. Surface de cuisson d'aliment pour ustensile de cuisine ou appareil de cuisson, **caractérisée en ce que** cette surface de cuisson est un alliage métallique de zirconium et d'au moins un autre métal, et dont la teneur en zirconium est d'au moins 75 %.

2. Surface de cuisson d'aliment pour ustensile de cuisine ou appareil de cuisson selon la revendication précédente, **caractérisée en ce que** l'alliage contient moins de 10 % d'éléments d'addition au zirconium.

3. Surface de cuisson d'aliment pour ustensile de cuisine ou appareil de cuisson selon l'une des revendications précédentes, **caractérisée en ce qu'**elle est obtenue par le dépôt d'une épaisseur appropriée du matériau métallique sur un substrat.

4. Surface de cuisson d'aliment pour ustensile de cuisine ou appareil de cuisson selon la revendication 3, **caractérisée en ce que** le dépôt est réalisé par pulvérisation cathodique d'une cible massive.

5. Surface de cuisson d'aliment pour ustensile de cuisine ou appareil de cuisson selon la revendication 4, **caractérisée en ce que** la cible est obtenue par assemblage sur un substrat de cuivre d'une ou plusieurs tôles ou plaques de matériau ayant la composition recherchée, lesdites tôles ou plaques étant obtenues soit par frittage de poudre ou projection thermique de poudre, soit issues de coulée.

6. Surface de cuisson d'aliment pour ustensile de cuisine ou appareil de cuisson selon l'une des revendications 1 à 2, **caractérisée en ce qu'**elle est obtenue par assemblage d'une tôle métallique cristalline ayant la composition recherchée sur un substrat.

7. Surface de cuisson d'aliment pour ustensile de cuisine ou appareil de cuisson selon la revendication 6, **caractérisée en ce que** la tôle est obtenue par laminage d'un lingot issu d'une fusion d'un mélange de métaux.

8. Surface de cuisson d'aliment pour ustensile de cuisine ou appareil de cuisson selon l'une des revendications 6 ou 7, **caractérisée en ce que** l'assemblage est réalisé par l'une des techniques suivantes : colaminage, brasage, frappe à chaud.

9. Surface de cuisson d'aliment pour ustensile de cuisine ou appareil de cuisson selon l'une des revendications 6 à 8, **caractérisée en ce que** la tôle et le substrat subissent, après assemblage, une étape de mise en forme par emboutissage.

10. Surface de cuisson d'aliment pour ustensile de cuisine ou appareil de cuisson selon l'une des revendications 3 à 9, **caractérisée en ce que** le substrat est composé d'une ou plusieurs tôle(s) métallique(s) des matériaux suivants : aluminium, inox, fonte, acier, cuivre.

## Patentansprüche

1. Fläche zum Kochen von Lebensmitteln für ein Küchenutensil oder Kochgerät, **dadurch gekennzeichnet, dass** diese Kochfläche eine Metalllegierung aus Zirkonium ist und mindestens einem anderen Metall und deren Zirkoniumanteil mindestens 75 % beträgt.

2. Fläche zum Kochen von Lebensmitteln für ein Küchenutensil oder Kochgerät nach dem vorangehenden Anspruch, **dadurch gekennzeichnet, dass** die Legierung mindestens 10 % Zusatzelemente zum Zirkonium enthält.

3. Fläche zum Kochen von Lebensmitteln für ein Küchenutensil oder Kochgerät nach einem der vorangehenden Ansprüche, **dadurch gekennzeichnet, dass** sie durch das Abscheiden einer geeigneten Dicke des Metalls auf einem Substrat erhalten wird.

4. Fläche zum Kochen von Lebensmitteln für ein Küchenutensil oder Kochgerät nach Anspruch 3, **dadurch gekennzeichnet, dass** das Abscheiden durch Kathodenzerstäubung eines massiven Targets erfolgt.

5. Fläche zum Kochen von Lebensmitteln für ein Küchenutensil oder Kochgerät nach Anspruch 4, **dadurch gekennzeichnet, dass** das Target durch Zusammenfügen eines oder mehrerer Bleche oder Platten aus einem Material mit der gesuchten Zusammensetzung auf einem Kupfersubstrat erhalten wird, wobei die Bleche oder Platten entweder durch Sintern von Pulver oder thermisches Spritzen von Pulver oder als Gussergebnis erhalten werden.

6. Fläche zum Kochen von Lebensmitteln für ein Küchenutensil oder Kochgerät nach einem der Ansprüche 1 bis 2, **dadurch gekennzeichnet, dass** sie durch Zusammenfügen eines kristallinen Metallblechs mit der gesuchten Zusammensetzung auf einem Substrat erhalten wird.

7. Fläche zum Kochen von Lebensmitteln für ein Küchenutensil oder Kochgerät nach Anspruch 6, **dadurch gekennzeichnet, dass** das Blech durch Walzen eines Barrens erhalten wird, das aus der Schmelze einer Mischung von Metallen entstanden ist.

8. Fläche zum Kochen von Lebensmitteln für ein Küchenutensil oder Kochgerät nach einem der Ansprüche 6 oder 7, **dadurch gekennzeichnet, dass** das Zusammenfügen mittels einer der folgenden Techniken erfolgt: Paketwalzen, Löten, Warmstauchen.

9. Fläche zum Kochen von Lebensmitteln für ein Küchenutensil oder Kochgerät nach einem der Ansprüche 6 bis 8, **dadurch gekennzeichnet, dass** das Blech und das Substrat nach dem Zusammenfügen einem Schritt der Formung durch Tiefziehen unterzogen werden.

10. Fläche zum Kochen von Lebensmitteln für ein Küchenutensil oder Kochgerät nach einem der Ansprüche 3 bis 9, **dadurch gekennzeichnet, dass** das Substrat aus einem oder mehreren Metallblechen aus folgen Materialen besteht: Aluminium, nichtrostendem Stahl, Gusseisen, Stahl, Kupfer.

## Claims

1. A food cooking surface for a kitchen utensil or cooking appliance, **characterized in that** said cooking surface is a metallic alloy of zirconium and at least one other metal and has a zirconium content of at least 75%.

2. A food cooking surface for a kitchen utensil or cooking appliance according to the preceding claim, **characterized in that** the alloy contains less than 10% of elements added to the zirconium.

3. A food cooking surface for a kitchen utensil or cooking appliance according to one of the preceding claims, **characterized in that** it is obtained by depositing a suitable thickness of metallic material onto a substrate.

4. A food cooking surface for a kitchen utensil or cooking appliance according to claim 3, **characterized in that** deposition is carried out by large-target cathode sputtering.

5. A food cooking surface for a kitchen utensil or cooking appliance according to claim 4, **characterized in that** the target is obtained by assembling one or more sheets or plates of material having the desired composition on a copper substrate, said sheets or plates being obtained either by powder sintering or thermal powder projection, or by casting.

6. A food cooking surface for a kitchen utensil or cooking appliance according to claim 1 or claim 2, **characterized in that** it is obtained by assembling a crystalline metallic sheet having the desired composition on a substrate.

7. A food cooking surface for a kitchen utensil or cooking appliance according to claim 6, **characterized in that** the sheet is obtained by rolling an ingot obtained by melting a mixture of metals.

8. A food cooking surface for a kitchen utensil or cooking appliance according to claim 6 or claim 7, **characterized in that** assembly is carried out using one of the following techniques: co-laminating, brazing, hot-striking.

9. A food cooking surface for a kitchen utensil or cooking appliance according to one of claims 6 to 8, **characterized in that** after assembly, the sheet and the substrate undergo a step for forming by drawing.

10. A food cooking surface for a kitchen utensil or cooking appliance according to claims 3 to 9, **characterized in that** the substrate is composed of one or more metallic sheet(s) of the following materials: aluminum, stainless steel, cast iron, steel, copper.
